# EUROPEAN PATENT SPECIFICATION

(11) **EP 2 866 330 B1**
(45) Date of publication and mention of the grant of the patent: **14.09.2022**
(21) Application number: 13806587.5
(22) Date of filing: 12.06.2013
(51) Int. Cl.: H02K 7/06, F16H 25/24, F16J 15/14, C09K 3/10

(54) **ELECTRIC LINEAR ACTUATOR**
ELEKTRISCHER LINEARANTRIEB
ACTIONNEUR LINÉAIRE ÉLECTRIQUE

(30) Priority: 21.06.2012 JP 2012139827
(43) Date of publication of application: 29.04.2015
(73) Proprietor: NTN Corporation, Osaka-shi, Osaka 550-0003 (JP)
(72) Inventor: MIZUUCHI, Takao, Shizuoka 4388510 (JP)
(74) Representative: Cohausz & Florack
(86) International application number: PCT/JP2013/066271
(87) International publication number: WO 2013/191066

(56) References cited:
- DE-A1- 19 517 735
- FR-A- 1 404 116
- JP-A- S6 040 868
- JP-A- 2008 228 557
- JP-A- 2008 228 557
- JP-A- 2008 303 993
- JP-A- 2010 068 559
- JP-A- 2010 270 887
- US-A1- 2012 247 240

## Description

### Field of the Invention

The present invention relates to an electric actuator provided with a ball screw mechanism used in motors for general industries and driving sections of automobiles etc., and more particularly to an electric actuator used in a transmission or a parking brake for converting rotary motion from an electric motor to linear motion of a driving shaft via a ball screw mechanism.

### Description of Background Art

Such an electric actuator with a ball screw mechanism is disclosed in JP 2010 270 887 A. It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly increase of sizes of electric motors and power consumption are obliged. Accordingly, the ball screw mechanisms have been widely adopted as more efficient actuators.

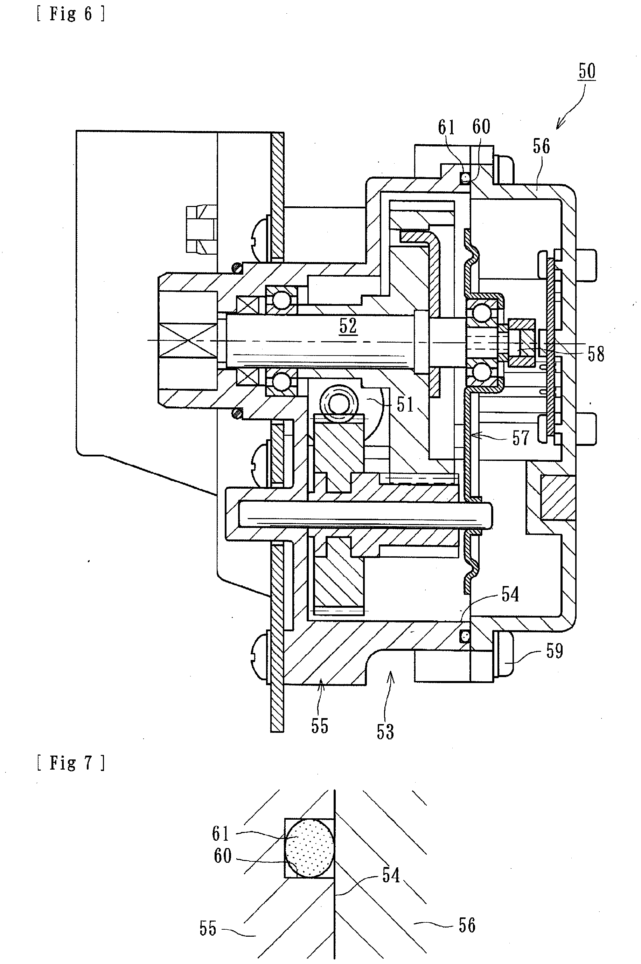

It is known an electric linear actuator of the prior art e.g. as shown in Fig. 6. This electric linear actuator 50 comprises an electric motor 51, a speed reduction mechanism 53 for reducing the rotational speed of the electric motor 51 and transmitting it to an output shaft 52, a gear casing 55 for containing the speed reduction mechanism 53 and having an opening 54 at a side of one end of the output shaft 52, an end cover 56 for closing the opening 54 of the gear casing 55, and an intermediate cover 57 between the gear casing 55 and the end cover 56 for bearing one end of the output shaft 52. The speed reduction mechanism 53 is arranged at a side of the gear casing 55 with respect to the intermediate cover 57 and a rotational position detecting device 58 is arranged at a side of the end cover 56 with respect to the intermediate cover 57.

The end cover 56 is fastened to the opening 54 of the gear casing 55 and a whole periphery of the opening 54 of the gear casing 55 is formed with a groove 60 into which a packing 61 is arranged. This packing 61 functions to prevent entering of dusts or foreign matters into the inside of the speed reduction mechanism 53 through junction between the gear casing 55 and the end cover 56 (see e.g. Patent Document 1 below).

### Document of the Prior Art

### Patent Document

Patent Document 1: JP 2010 -68559 A

### Disclosure of the Invention

### Problems to be solved by the Invention

However, in the sealing structure of the prior art, since the gear casing 55 and cover 56 are liable to be deformed when they are formed of material of low rigidity such as aluminum alloy, a gap or clearance caused by the deformation of the gear casing 55 or cover 56 could not be sealed only by elastic deformation of the packing 61 and thus the sealability of the speed reduction mechanism 53 could not be assured.

The present invention has noticed to keep the sealability of the electric linear actuator with using liquid gasket having adhesiveness and viscosity and therefore, it is an object of the present invention to provide an electric linear actuator having tough sealability between the joining surfaces of the housings.

### Means for solving the Problems

For achieving the object of the present invention, there is provided an electric linear actuator according to claim 1.

According to the electric linear actuator of the present invention, since it comprises a speed reduction mechanism for transmitting the rotational power of the electric motor to a ball screw mechanism via a motor shaft with reducing the motor speed and the ball screw mechanism is adapted to convert the rotational motion of the electric motor transmitted via the speed reduction mechanism to an axial linear motion of a driving shaft and comprising a nut formed with a helical screw groove on its inner circumference and rotationally but axially immovably supported by bearings on the housing, and a screw shaft coaxially integrated with the driving shaft, formed with helical screw groove on its outer circumference corresponding to helical screw groove of the nut, adapted to be inserted into the nut via a large number of balls, and supported on the housing not rotationally but axially movably and is characterized in that the housing comprises a first housing and a second housing arranged with their end faces being abutted against each other, and that joining surfaces of the end faces of the first and second housings are sealed by curing liquid curable material, it is possible to provide an electric linear actuator which can surely achieve close-contact of the first and second housings each other according to flexible deformation of the curable material due to adhesiveness and viscosity and thus achieve tough sealability between the joining surfaces of the housings even if the housings undergo a relatively large deformation.

It is preferable as defined in claim 2 that the curable material is a silicone-based liquid gasket. This enables to achieve sealability within about 24 hours since the silicone-based liquid gasket can be cured relatively in a short time.

According to the invention the joining surfaces of the first and second housings are formed with a first void and a second void arranged oppositely to and communicating with the first void, that the curable material is injected to the first void, and that a volume of the curable material is larger than that of the first void and smaller than total of volumes of the first and second voids. This enables excessive curable material overflowed from the first void to be flowed into the second void and thus to prevent the overflowed curable material from being protruded to the outside of the second void. Accordingly, it is possible to prevent protruded excessive curable material from falling off from the housing or to prevent protruded excessive curable material from spoiling appearance of the housing.

It is preferable as defined in claim 3 that the first void is formed as having a substantially semicircular cross-section and the second void is formed as having a substantially tri-angular cross-section. This makes it possible to effectively prevent falling off of protruded curable material by a simple and space-saving structure.

### Effects of the Invention

According to the electric linear actuator of the present invention, since it comprises a housing; an electric motor mounted on the housing; and a speed reduction mechanism for transmitting the rotational power of the electric motor to a ball screw mechanism via a motor shaft with reducing the motor speed; the ball screw mechanism being adapted to convert the rotational motion of the electric motor transmitted via the speed reduction mechanism to an axial linear motion of a driving shaft and comprising a nut formed with a helical screw groove on its inner circumference and rotationally but axially immovably supported by bearings on the housing, and a screw shaft coaxially integrated with the driving shaft, formed with helical screw groove on its outer circumference corresponding to helical screw groove of the nut, adapted to be inserted into the nut via a large number of balls, and supported on the housing not rotationally but axially movably and is characterized in that the housing comprises a first housing and a second housing arranged with their end faces being abutted against each other, and that joining surfaces of the end faces of the first and second housings are sealed by curing liquid curable material, it is possible to provide an electric linear actuator which can surely achieve close-contact of the first and second housings each other according to flexible deformation of the curable material due to adhesiveness and viscosity and thus achieve tough sealability between the joining surfaces of the housings even if the housings are undergone a relatively large deformation.

### Brief Description of the Drawings

[Fig. 1] A longitudinal section view showing one preferable embodiment of the electric linear actuator of the present invention;
[Fig. 2] A longitudinal section view showing an actuator main body of the electric linear actuator of Fig. 1;
[Fig. 3] A partially enlarged view showing an intermediate gear of the electric linear actuator of Fig. 1;
[Fig.4] A partially enlarged view showing a modification of the intermediate gear of Fig. 3;
[Fig. 5] A partially enlarged section view showing a joining portion between first and second housing of the electric linear actuator of Fig. 1;
[Fig. 6] A longitudinal section view showing an electric linear actuator of the prior art; and
[Fig. 7] A partially enlarged view showing a sealing structure of Fig. 6.

### Preferable Mode for carrying out the Invention

One preferable mode for carrying out the present invention is an electric linear actuator comprising a housing of aluminum alloy; an electric motor mounted on the housing; and a speed reduction mechanism for transmitting the rotational power of the electric motor to a ball screw mechanism via a motor shaft with reducing the motor speed; the ball screw mechanism being adapted to convert the rotational motion of the electric motor transmitted via the speed reduction mechanism to an axial linear motion of a driving shaft and comprising a nut formed with a helical screw groove on its inner circumference and rotationally but axially immovably supported by bearings on the housing, and a screw shaft coaxially integrated with the driving shaft, formed with helical screw groove on its outer circumference corresponding to helical screw groove of the nut, adapted to be inserted into the nut via a large number of balls, and supported on the housing not rotationally but axially movably characterized in that the housing comprises a first housing and a second housing arranged with their end faces being abutted against each other, that the joining surfaces of the first and second housings are formed with a first void and a second void arranged oppositely to and communicating with the first void, that the curable material is injected to the first void, and that a volume of the curable material is larger than that of the first void and smaller than total of volumes of the first and second voids.

### Embodiment

One preferable embodiment of the present invention will be hereinafter described with reference to the drawings.

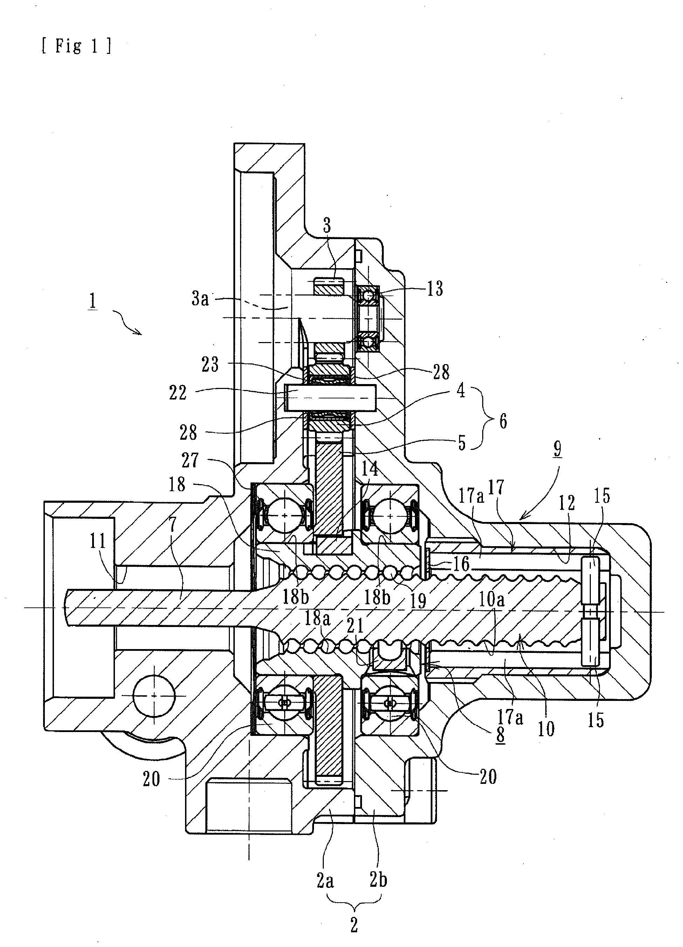

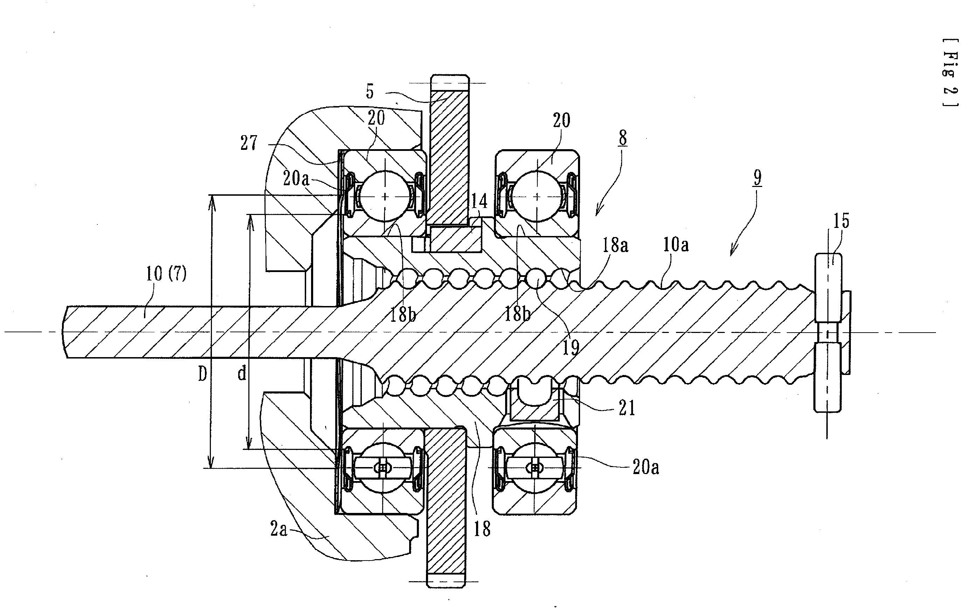

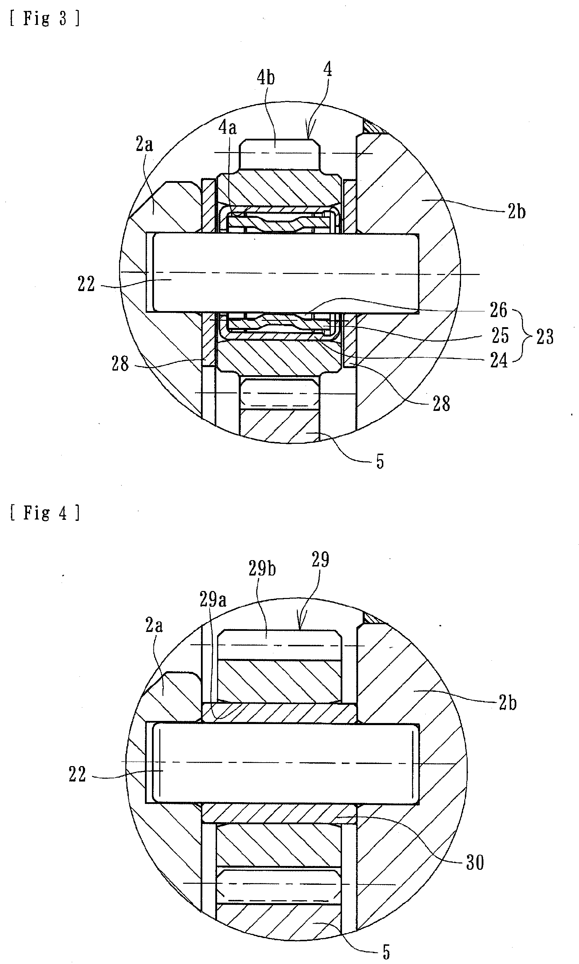

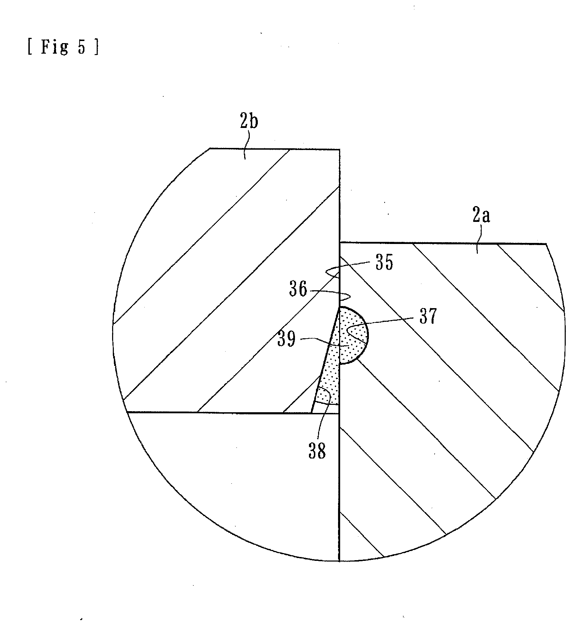

Fig. 1 is a longitudinal section view showing one preferable embodiment of the electric linear actuator of the present invention; Fig. 2 is a longitudinal section view showing an actuator main body of the electric linear actuator of Fig. 1; Fig. 3 is a partially enlarged view showing an intermediate gear of the electric linear actuator of Fig. 1; Fig.4 is a partially enlarged view showing a modification of the intermediate gear of Fig. 3; and Fig. 5 is a partially enlarged section view showing a joining portion between first and second housing of the electric linear actuator of Fig. 1.

As shown in Fig. 1, an electric linear actuator 1 comprises a cylindrical housing 2, an electric motor (not shown) mounted on the housing 2, an intermediate gear 4 mating with an input gear 3 mounted on a motor shaft 3a of the electric motor, a speed reduction mechanism 6 including an output gear 5 mating with the intermediate gear 4, a ball screw mechanism 8 for converting rotational motion of the electric motor to axial linear motion of a driving shaft 7 via the reduction mechanism 6, and an actuator main body 9 including the ball screw mechanism 8.

The housing 2 is formed of aluminum alloy such as A 6063 TE or A DC 12 by aluminum die casting and comprises a first housing 2a and a second housing 2b adapted to be abutted and integrally secured each other by fastening bolts (not shown). The electric motor is mounted on the first housing 2a and accommodating bores 11, 12 for accommodating the screw shaft 10 are formed respectively on the first and second housings 2a, 2b.

The input gear 3 is press-fitted onto the end of the motor shaft 3a not rotationally relative to the motor shaft 3a and the motor shaft 3a is rotationally supported by a rolling bearing 13 such as a deep groove ball bearing. The output gear 5 mating with the intermediate spur gear 4 is rigidly secured on a nut 18 forming the ball screw mechanism 8 later mentioned.

The driving shaft 7 is integrated with the screw shaft 10 forming the ball screw mechanism 8 and engaging pins 15, 15 are arranged at one end (right end in Fig. 1) of the driving shaft 7. These guide pins 15, 15 can be abutted against a stopper ring 16 mounted on the second housing 2b to surely prevent the driving shaft 7 from being fallen out from the housing 2 and from being locked with being abutted against the inner wall of the housing 2. A numeral 17 denotes a sleeve mounted in the accommodating bore 12 of the housing 2b which is formed with axially extending grooves 17a, 17a. The engaging pins 15, 15 are engaged with the grooves 17a, 17a so that the screw shaft 10 is held against rotation but is axially slidable.

As shown in an enlarged view of Fig. 2, the ball screw mechanism 8 comprises the screw shaft 10 and the nut 18 fitted on the screw shaft 10 via balls 19. The screw shaft 10 is formed on its outer circumference with a helical screw groove 10a. On the other hand, the nut 18 is formed on its inner circumference with a helical screw groove 18a corresponding to the helical screw groove 10a of the screw shaft 10 and a number of balls 19 are rollably contained between these screw grooves 10a, 18a. The nut 18 is supported on the first and second housings 2a, 2b by two bearings 20, 20 rotationally but axially immovably relative to the housings 2a, 2b. A numeral 21 denotes a bridge member for connecting ends of the screw groove 18a and infinitely circulating balls 19 through the screw groove 18a of the nut 18.

The cross-sectional configuration of each screw groove 10a, 18a may be either one of circular-arc or Gothic-arc configuration. However, this embodiment adopts the Gothic-arc configuration since it can have a large contacting angle with the ball 19 and a small axial gap. This enables to have large rigidity against the axial load and to suppress generation of vibration.

The nut 18 is formed of case hardened steel such as SCM415 or SCM420 and its surface is hardened to HRC 55~62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM415 or SCM420 and its surface is hardened to HRC 55~62 by induction hardening or carburizing hardening.

The output gear 5 forming the reduction mechanism 6 is integrally secured on the outer circumference 18b of the nut 18 and two supporting bearings 20, 20 are press-fitted onto either side of the output gear 5 via a predetermined interface. This makes it possible to prevent generation of axial positional displacement between the supporting bearings 20, 20 and the output gear 5 although a thrust load would be applied to them from the driving shaft 7. In addition, each of the supporting bearings 20, 20 is formed of the deep groove ball bearing of sealed type in which shield plates 20a, 20a are arranged on either side of the support bearing to prevent leakage of grease contained in the bearings and penetration of worn powder or debris into the bearings from outside.

According to the present invention, since the supporting bearings 20, 20 for rotationally supporting the nut 18 are formed of deep groove ball bearings having same specifications, both a thrust load from the driving shaft 7 and a radial load applied via the output gear 5 can be borne by these bearings 20, 20 and additionally it is possible to simplify confirming operation for preventing erroneous assembly and thus to improve the assembling workability. The term "same specifications" here means that not only the inner diameter, outer diameter and width of the bearings, but size and number of the balls and internal clearance of the bearing are same.

One of the supporting bearings 20, 20 is mounted on the first housing 2a via a washer 27 formed of a ring-shaped elastic member. The washer 27 is a wave washer press-formed of austenitic stainless steel sheet (e.g. SUS304 of JIS) or preservative cold rolled steel sheet (e.g. SPCC of JIS) and its inner diameter "D" is larger than an outer diameter "d" of an inner ring of the supporting bearing 20. This enables to eliminate an axial play of the paired bearings 20, 20 and thus to obtain smooth rotational performance. In addition, since the washer 27 abuts only with the outer ring of the bearing 20 and does not interfere with the inner ring forming a rotation ring, it is possible to surely prevent increase of friction due to contact of the inner ring with the first housing 2a and thus locking of the nut 18 even if the nut 18 would be urged against the housing 2a by generated anti-thrust load.

As shown in Fig. 3, the intermediate gear 4 is rotationally supported via a rolling bearing 23 on a gear shaft 22 supported at its opposite ends on the first and second housings 2a, 2b. A misalignment (assembling error) of the gear shaft 22 and the rolling bearing 23 can be allowed and smooth rotation of the intermediate gear 4 will be ensured for example by setting the end of the gear shaft 22 of second housing side via clearance fitting in case of setting the end of the gear shaft 22 of first housing side via press-fitting. In the embodiment illustrated in Fig. 3, the rolling bearing 23 is formed of a needle roller bearing of a so-called shell type comprising an outer ring 24 press-formed of steel sheet and press-fitted into an inner circumference of the intermediate gear 4, and a plurality of needle rollers 26 rollably contained in the outer ring 24 via a cage 25. This enables to adopt bearings of easily available standard design and thus to reduce the manufacturing cost of the electric linear actuator.

In addition, ring-shaped washers 28, 28 are arranged at either side of the intermediate gear 4 to prevent the intermediate gear 4 from being directly contacted with the first and second housings 2a, 2b. Furthermore, a face width of gear teeth 4b of the intermediate gear 4 is formed smaller than the whole axial width of the intermediate gear 4. This makes it possible to reduce contacting area between the intermediate gear 4 and the washers 28, 28 and thus to achieve smooth rotational performance with suppressing frictional resistance during rotation. The washers 28, 28 are flat washers press-formed of austenitic stainless steel sheet or preservative cold rolled steel sheet. Alternatively, the washers 28, 28 may be formed of brass, sintered metal or thermoplastic synthetic resin such as PA (polyamide) 66 etc. in which a predetermined amount of fiber reinforcing materials such as GF (glass fibers) etc. is impregnated.

In addition, an axial width of the rolling bearing 23 of the intermediate gear 4 is set smaller than a whole axial width of the intermediate gear 4. This makes it possible to prevent the side surfaces of the bearing 23 from being worn and deformed and to obtain smooth rotational performance.

A modification of Fig. 3 is shown in Fig. 4. An intermediate gear 29 is rotationally supported via a sliding bearing 30 on the gear shaft 22 supported at its opposite ends on the first and second housings 2a, 2b. According to this modification, a face width 29b of gear teeth of the intermediate gear 29 is formed in same as the whole axial width of the intermediate gear 29 and the sliding bearing 30 is structured as an oil impregnated bearing (e.g. "BEARFIGHT" (registered trade mark of NTN corp., Japan)) and press-fitted into the inner circumference 29a of the intermediate gear 29. A whole axial width of the sliding bearing 30 is formed larger than the whole axial width of the intermediate gear 29. This makes it possible to prevent the intermediate gear 29 from being contacted with the first and second housings 2a, 2b and worn without mounting any washer, to achieve smooth rotational performance with suppressing frictional resistance during rotation of the intermediate gear 29, and to reduce the manufacturing cost with suppressing increase of the number of components. The sliding bearing 30 may be formed of thermoplastic polyimide resin enabling injection molding.

The sleeve 17 is a cylindrical member formed of medium carbon steel such as S55C or case-hardened steel such as SCM415 or SCM420 by a cold rolling method and is formed with axially extending grooves 17a, 17a arranged at opposite positions on the inner circumference of the sleeve 17. The surfaces of the grooves 17a are metallic plated by e.g. electroless plating. On the other hand, the engaging pins 15 are also metallic plated by e.g. hard chromium plating. This enables to improve the wear resisting property and thus to suppress wear of the grooves 17a and pins 15 for a long term. Other metallic plating methods may be used such as galvanizing, uni-chromium plating, chromate plating, nickel plating, chromium plating, Kanigen plating etc.. It is preferable to adopt different kinds of metallic platings on the grooves 17a and the engaging pins 15 to prevent sticking of the grooves 17a and pins 15.

As shown in Fig. 5, joining surfaces of the first housing 2a and the second housing 2b are respectively formed with a first void 37 and a second void 38 which are oppositely arranged each other. Curable material 39 is injected to the first void 37. A volume of the curable material 39 is larger than that of the first void 37 and smaller than total of volumes of the first and second voids 37, 38. That is, excessive curable material 39 overflowed from the first void 37 can be flowed into the oppositely arranged second void 38. This makes it possible to prevent the overflowed curable material from being protruded to the outside of the second void 38. Accordingly, it is possible to prevent protruded excessive curable material from falling off from the housing 2 or from spoiling appearance of the housing 2. In addition, since the joining surfaces 35, 36 of the end faces of the first and second housings 2a, 2b are sealed by curing liquid curable material 39, it is possible to provide an electric linear actuator which can surely achieve close-contact of the first and second housings 2a, 2b each other according to flexible deformation of the curable material 39 due to adhesiveness and viscosity and thus achieve tough sealability between the joining surfaces 35, 36 of the housings even if the housings 2a, 2b are undergone a relatively large deformation.

There are examples of the curable materials 39 e.g. silicone based or synthetic rubber based liquid gaskets such as organic solvent silicone-based liquid gasket, water soluble silicone-based liquid gasket; resin based liquid gaskets such as anaerobic acrylic based liquid gasket, synthetic resin emulsion type liquid gasket; and rein based liquid gasket of high molecular resin, fluorine plastic and inorganic resin. Since the curable material 39 comprising resin based liquid gaskets can be cured relatively short time, it is possible to achieve sealability within about 24 hours.

According to the present invention, the first void 37 is formed as having a substantially semicircular cross-section and the second void 38 is formed as having a substantially tri-angular cross-section. This makes it possible to effectively prevent falling off of protruded curable material by a simple and space-saving structure.

The present invention has been described with reference to the preferred embodiment. Obviously, modifications and alternations will occur to those of ordinary skill in the art upon reading and understanding the preceding detailed description can be made without departing from the scope of the invention as defined in the accompanying claims.

### [Applicability to Industries]

The electric linear actuator of the present invention can be used in an electric motor for general industries and driving sections of an automobile etc. and can be applied to an electric linear actuator having ball screw mechanism for converting the rotational input from an electric motor to the linear motion of a driving shaft.

### Explanation of Reference numerals

- 1: electric linear actuator
- 2: housing
- 2a: first housing
- 2b: second housing
- 3: input gear
- 3a: motor shaft
- 4, 29: intermediate gear
- 4a, 29a: inner circumference of intermediate gear
- 4b, 29b: face width
- 5: output gear
- 6: speed reduction mechanism
- 7: driving shaft
- 8: ball screw mechanism
- 9: actuator main body
- 10: screw shaft
- 10a, 18a: screw groove
- 11, 12: accommodating bore
- 13,23: rolling bearing
- 14: key
- 15: engaging pin
- 16: stopper ring
- 17: sleeve
- 17a: groove
- 18: nut
- 18b: outer circumference of the nut
- 19: ball
- 20: supporting bearing
- 20a: shield plate
- 21: bridge member
- 22: gear shaft
- 24: outer ring
- 25: cage
- 26: needle roller
- 27, 28: washer
- 30: sliding bearing
- 35: joining surface of first housing
- 36: joining surface of second housing
- 37: first void
- 38: second void
- 39: curable material
- 50: electric actuator
- 51: electric motor
- 52: output shaft
- 53: speed reduction mechanism
- 54: opening of gear casing
- 55: gear casing
- 56: end cover
- 57: intermediate cover
- 58: rotational position detecting device
- 59: bolt
- 60: groove
- 61: packing
- D: inner diameter of washer
- d: outer diameter of inner ring of supporting bearing

## Claims

1. An electric linear actuator comprising:
a housing (2);
an electric motor mounted on the housing (2); and
a speed reduction mechanism (6) for transmitting the rotational power of the electric motor to a ball screw mechanism (8) via a motor shaft (3a) with reducing the motor speed;
the ball screw mechanism (8) being adapted to convert the rotational motion of the electric motor transmitted via the speed reduction mechanism (6) to an axial linear motion of a driving shaft (7) and comprising a nut (18) formed with a helical screw groove (18a) on its inner circumference and rotationally but axially immovably supported by bearings (20, 20) on the housing (2), and a screw shaft (10) coaxially integrated with the driving shaft (7), formed with helical screw groove (10a) on its outer circumference corresponding to helical screw groove (18a) of the nut (18), adapted to be inserted into the nut (18) via a large number of balls (19), and supported on the housing (2) not rotationally but axially movably, wherein the housing (2) comprises a first housing (2a) and a second housing (2b) arranged with their end faces being abutted against each other, **characterized in:**
**that** joining surfaces (35, 36) of the end faces of the first and second housings (2a, 2b) are sealed by curing liquid curable material (39),
**that** the joining surfaces of the first and second housings (2a, 2b) are formed with a first void (37) and a second void (38) arranged oppositely to and communicating with the first void (37), wherein the curable material (39) is injected to the first void (37), and wherein a volume of the curable material (39) is larger than that of the first void (37) and smaller than total of volumes of the first and second voids (37, 38) and
**that** the joining surfaces (35, 36) of the first housing (2a) and the second housing (2b) have a portion where the housings (2a, 2b) are in direct contact with each other and a portion where the curable material (39) is interposed.

2. The electric linear actuator of claim 1 wherein the curable material is a silicone-based liquid gasket.

3. The electric linear actuator of claim 1 wherein the first void (37) is formed as having a substantially semicircular cross-section and the second void (38) is formed as having a substantially tri-angular cross-section.

## Patentansprüche

1. Elektrischer Linearaktor, umfassend:
ein Gehäuse (2);
einen Elektromotor, der auf dem Gehäuse (2) montiert ist; und
einen Drehzahlverminderungsmechanismus (6) zum Übertragen der Drehleistung des Elektromotors über eine Motorwelle (3a) auf einen Kugelumlaufspindelmechanismus (8), wobei die Motordrehzahl vermindert wird;
wobei der Kugelumlaufspindelmechanismus (8) zum Umwandeln der Drehbewegung des Elektromotors, die durch den Drehzahlverminderungsmechanismus (6) übertragen wird, in eine axiale Linearbewegung einer Antriebswelle (7) ausgelegt ist und eine Mutter (18), die mit einer spiralförmigen Schraubnut (18a) auf ihrem Innenumfang ausgebildet ist und durch Lager (20, 20) auf dem Gehäuse (2) drehbar, aber axial unbeweglich getragen wird, und eine Schraubenwelle (10) umfasst, die koaxial in die Antriebswelle (6) integriert ist, mit einer spiralförmigen Schraubnut (10a) auf ihrem Außenumfang ausgebildet ist, die der spiralförmigen Schraubnut (18a) der Mutter (18) entspricht, und ausgelegt ist, um über eine große Anzahl von Kugeln (17) in die Mutter (18) eingeführt und axial beweglich, aber nicht drehbar auf dem Gehäuse getragen zu werden, wobei das Gehäuse (2) ein erstes Gehäuse (2a) und ein zweites Gehäuse (2b) umfasst, die so angeordnet sind, dass ihre Stirnflächen aneinanderstoßen, **dadurch gekennzeichnet, dass**:
Verbindungsflächen (35, 36) der Stirnflächen des ersten und des zweiten Gehäuses (2a, 2b) durch Aushärten von flüssigem härtbarem Material (39) versiegelt sind,
die Verbindungsflächen des ersten und des zweiten Gehäuses (2a, 2b) mit einem ersten Hohlraum (37) und einem zweiten Hohlraum (38) ausgebildet sind, der gegenüber dem ersten Hohlraum (37) angeordnet ist und damit in Verbindung steht, wobei das härtbare Material (39) in den ersten Hohlraum (37) eingespritzt ist, und wobei ein Volumen des härtbaren Materials (39) größer als das des ersten Hohlraums (37) und kleiner als die Gesamtheit der Volumina des ersten und des zweiten Hohlraums (37, 38) ist, und
die Verbindungsflächen (35, 36) des ersten Gehäuses (2a) und des zweiten Gehäuses (2b) einen Abschnitt, in dem die Gehäuse (2a, 2b) in direktem Kontakt miteinander stehen, und einen Abschnitt (39) aufweisen, in den das härtbare Material (39) eingefügt ist.

2. Elektrischer Linearaktor nach Anspruch 1, wobei das härtbare Material eine Flüssigdichtung auf Silikonbasis ist.

3. Elektrischer Linearaktor nach Anspruch 1, wobei der erste Hohlraum (37) so ausgebildet ist, dass er einen im Wesentlichen halbkreisförmigen Querschnitt aufweist, und der zweite Hohlraum (38) so ausgebildet ist, dass er einen im Wesentlichen dreieckigen Querschnitt aufweist.

## Revendications

1. Actionneur linéaire électrique, comprenant :
un boîtier (2) ;
un moteur électrique monté dans le boîtier (2) ; et
un mécanisme de réduction de vitesse (6) destiné à transmettre la puissance rotationnelle du moteur électrique à un mécanisme à vis à billes (8) par le biais d'un arbre de moteur (3a) en réduisant la vitesse du moteur;
le mécanisme à vis à billes (8) étant adapté pour convertir le mouvement rotationnel du moteur électrique transmis par le biais du mécanisme de réduction de vitesse (6) en un mouvement linéaire axial d'un arbre d'entraînement (7) et comprenant un écrou (18) formé avec une gorge de vis hélicoïdale (18a) sur sa circonférence intérieure et supporté en rotation, mais avec immobilité axiale, par des paliers (20, 20) sur le boîtier (2), et une tige de vis (10) intégrée de manière coaxiale avec l'arbre d'entraînement (7), formée avec une gorge de vis hélicoïdale (10a) sur sa circonférence extérieure correspondant à la gorge de vis hélicoïdale (18a) de l'écrou (18), adapté pour être inséré dans l'écrou (18) par le biais d'un grand nombre de billes (19), et supporté sur le boîtier (2) sans mobilité rotationnelle, mais axiale, le boîtier (2) comprenant un premier boîtier (2a) et un deuxième boîtier (2b) disposés avec leurs faces d'extrémité aboutées l'une contre l'autre, **caractérisé en ce:**
**que** les surfaces de jonction (35, 36) des faces d'extrémité des premier et deuxième boîtiers (2a, 2b) sont scellées par durcissement d'un matériau durcissable liquide (39),
**que** les surfaces de jonction des premier et deuxième boîtiers (2a, 2b) sont formées avec une première cavité (37) et une deuxième cavité (38), disposée à l'opposé de la première cavité (37) et communiquant avec celle-ci, le matériau durcissable (39) étant injecté dans la première cavité (37) et un volume du matériau durcissable (39) étant supérieur à celui de la première cavité (37) et plus petit que le total des volumes des première et deuxième cavités (37, 38) et que les surfaces de jonction (35, 36) du premier boîtier (2a) et du deuxième boîtier (2b) comportent une portion où les boîtiers (2a, 2b) se trouvent en contact direct l'un avec l'autre et une portion où est interposé le matériau durcissable (39).

2. Actionneur linéaire électrique selon la revendication 1, le matériau durcissable étant un joint plat liquide à base de silicone.

3. Actionneur linéaire électrique selon la revendication 1, la première cavité (37) étant formée en ayant une section transversale sensiblement semi-circulaire et la deuxième cavité (38) étant formée en ayant une section transversale sensiblement triangulaire.
